# EUROPEAN PATENT APPLICATION

(11) **EP 4 836 135 A1**
(43) Date of publication of application: **04.11.2026**
(21) Application number: 24928133.8
(22) Date of filing: 05.11.2024
(51) Int. Cl.: H01M 50/244

(54) **HOLD-DOWN BAR, BATTERY, AND ELECTRIC DEVICE**

(30) Priority: 07.03.2024 CN 202410265133
(71) Applicant: Contemporary Amperex Technology Co., Limited, Ningde, Fujian 352100 (CN)
(72) Inventor: WANG, Peng, Ningde, Fujian 352100 (CN); CHEN, Xingdi, Ningde, Fujian 352100 (CN); YAO, Pengcheng, Ningde, Fujian 352100 (CN)
(74) Representative: Kraus & Lederer PartGmbB
(86) International application number: PCT/CN2024/130000
(87) International publication number: WO 2025/185203

(57) **Abstract**

A hold-down bar (13), a battery (10), and an electric device. The hold-down bar (13) comprises: a hold-down bar body (131), in which a mounting groove (1311) is formed; and connectors (132), wherein two ends of the hold-down bar body (131) are respectively connected to the connectors (132), and each connector (132) comprises a main body section (1321) connected to the hold-down bar body (131) and an assembly section (1322) configured to be connected to a case (11) of the battery (10), at least part of the main body section (1321) being mounted in the mounting groove (1311).

## Description

### CROSS-REFERENCE TO RELATED APPLICATIONS

The present application is based on and claims priority to Chinese patent application No. 202410265133.5, filed on March 07, 2024, the entire disclosure of which is incorporated herein by reference.

### TECHNICAL FIELD

The present application relates to the technology field of batteries, and in particular, to a hold-down bar, a battery, and an electric device.

### BACKGROUND

During the assembly of battery cells, a hold-down bar is generally used to hold down a plurality of battery cells and a case tightly. In the related art, the entire hold-down bar is processed by means of integrated molding. The hold-down bar is directly held down on the battery cells, and then two ends of the hold-down bar are locked to the case by using bolts. However, the integrally molded hold-down bar cannot simultaneously meet the insulation requirements of the battery cells and the strength requirements of the bolt connection, resulting in the reliability of the connection between the hold-down bar and the case or the battery cells being seriously affected.

### SUMMARY

The present application provides a hold-down bar, a battery, and an electric device, to meet the insulation requirements of a hold-down bar body when being attached to the battery cells so as to optimize the safety protection performance of the entire battery, and simultaneously meet the strength requirements of a connector when being connected to the case so as to improve the reliability of the connection between the hold-down bar, the battery cells, and the case.

In a first aspect, an embodiment of the present application provides a hold-down bar, including:
a hold-down bar body, in which a mounting groove is mounted;
connectors, wherein two ends of the hold-down bar body are respectively connected to the connectors, and each connector includes a main body section connected to the hold-down bar body and an assembly section configured to be connected to a case of the battery, at least part of the main body section being mounted in the mounting groove.

In the above technical solution, by the provision of the hold-down bar body and the connectors above, compared with a conventional solution in which the hold-down bar is integrally molded, the hold-down bar is simultaneously adapted to the battery cells and the case, the insulation performance of the hold-down bar body is greatly improved, and the insulation requirements of the hold-down bar body when being attached to the battery cells are met, thereby reducing the probability of serious safety accidents caused by electric leakage and further optimizing the safety protection performance of the entire battery. The strength requirements of the connectors when being connected to the case are met simultaneously, the high-strength connection between the connectors and the case is realized, and the battery is prevented from causing the breakage of the hold-down bar under the working condition of large external disturbance, thereby improving the reliability of the connection between the hold-down bar, the battery cells, and the case.

In some embodiments, the thickness of the main body section is less than the depth of the mounting groove, and the main body section is connected to the bottom of the mounting groove.

In some embodiments, the main body section is connected to the mounting groove by gluing.

In some embodiments, two ends of the hold-down bar body are provided with avoidance notches on the side facing away from the mounting groove.

In some embodiments, the width of the main body section in a direction perpendicular to a length direction of the hold-down bar body is less than the width of the assembly section in the direction.

In some embodiments, the hold-down bar further includes:
a first buffer member, which is mounted in the mounting groove and separated from the connector.

In some embodiments, the first buffer member is connected to the hold-down bar body and the connector by gluing.

In some embodiments, the hold-down bar further includes:
a connecting band of which two ends are connected to the main body section, the connecting band being connected to the hold-down bar body, and the connecting band being mounted in the mounting groove.

In the above technical solution, by the provision of the connecting band above, the hold-down bar body, the connector, and the connecting band are connected to each other. The use of this structure significantly enhances the shear resistance of the connector, reduces the probability of a structural adhesive between the connector and the hold-down bar body falling off under force, further strengthens the overall structure of the hold-down bar, and at the same time improves the assembly accuracy between the connector, the hold-down bar body, and the connecting band in cooperation with the design of a positioning structure.

In some embodiments, the connecting band is connected to the hold-down bar body by gluing.

In some embodiments, a part of the connecting band is stacked and connected to the main body section.

In some embodiments, a surface of the connecting band connected to the bottom of the mounting groove is flush with a surface of the main body section connected to the bottom of the mounting groove.

In the above technical solution, by setting the surface of the connecting band connected to the bottom of the mounting groove to be flush with the surface of the main body section connected to the bottom of the mounting groove, a gap between the connecting band and the hold-down bar body is avoided by the reasonable deformation in the structure, which effectively reduces the usage amount of the structural adhesive, achieves cost control, and at the same time reduces the overall weight of the hold-down bar, and achieves a lightweight design, thereby improving the energy density of the entire battery.

In some embodiments, the connecting band includes a first connecting section, a first bending section, and a second connecting section, the first connecting section being connected to two ends of the second connecting section, the bending section being connected between the first connecting section and the second connecting section, the first connecting section being attached to the connector and located on one side of the connector facing away from the hold-down bar body, the second connecting section being attached to the hold-down bar body, and a surface of the second connecting section connected to the bottom of the mounting groove being flush with a surface of the main body section connected to the bottom of the mounting groove.

In some embodiments, the main body section includes a first connector section, a second bending section, and a second connector section that are sequentially connected, the first connector section being attached to the connecting band and located on one side of the connecting band facing away from the hold-down bar body, the second connector section being attached to the hold-down bar body, and a surface of the connecting band connected to the bottom of the mounting groove being flush with a surface of the second connector section connected to the bottom of the mounting groove.

In some embodiments, the minimum thickness H1 of the connecting band satisfies: 0.1 mm≤H1≤50 mm.

In some embodiments, the length L of the connector satisfies: 10 mm≤L≤3000 mm.

In some embodiments, the minimum thickness H2 of the connector satisfies: H2≥0.5 mm.

In a second aspect, an embodiment of the present application provides a battery, including:
a case, which defines an accommodating cavity;
a plurality of battery cells, which are mounted in the accommodating cavity; and
a plurality of hold-down bars according to any one of the above, which are mounted on surfaces of the plurality of battery cells and are connected to the case.

In a third aspect, an embodiment of the present application provides an electric device, including:
the battery as described above.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural view of a vehicle provided in some embodiments of the present application;
FIG. 2 is an exploded view of a structure of a battery provided in some embodiments of the present application;
FIG. 3 is a schematic view 1 of a partial structure of a battery provided in some embodiments of the present application;
FIG. 4 is a schematic view 2 of a partial structure of a battery provided in some embodiments of the present application;
FIG. 5 is an exploded view 1 of a structure of a hold-down bar provided in some embodiments of the present application;
FIG. 6 is a schematic view 1 of a partial structure of a hold-down bar provided in some embodiments of the present application;
FIG. 7 is an exploded view 2 of a structure of a heat conducting member provided in some embodiments of the present application;
FIG. 8 is a schematic view 2 of a partial structure of a hold-down bar provided in some embodiments of the present application; and
FIG. 9 is a schematic view 3 of a partial structure of a hold-down bar provided in some embodiments of the present application.

### Reference numerals:

1: vehicle; 20: motor; 30: controller;
10: battery;
11: case; 12: battery cell;
13: hold-down bar; 131: hold-down bar body; 1311: mounting groove; 1312: avoidance notch; 132: connector; 1321: main body section; 13211: first connector section; 13212: second connector section; 13213: second bending section; 1322: assembly section; 133: connecting band; 1331: first connecting section; 1332: second connecting section; 1333: first bending section; 135: first buffer member;
14: bottom protection plate.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

The battery cell mentioned in the embodiments of the present application may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, etc. The battery generally includes a case for encapsulating one or more battery cells or a plurality of battery modules. The case can prevent liquids or other foreign objects from affecting the charging or discharging of the battery cells.

The battery cell may include a housing, an electrode assembly, and an electrolyte solution, where the housing is configured to accommodate the electrode assembly and the electrolyte solution. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion that is of the positive electrode current collector and that is not coated with the positive electrode active material layer protrudes from a portion that is of the positive electrode current collector and that is coated with the positive electrode active material layer, and the portion that is of the positive electrode current collector and that is not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. A surface of the negative electrode current collector is coated with the negative electrode active material layer. A portion that is of the negative electrode current collector and that is not coated with the negative electrode active material layer protrudes from a portion that is of the negative electrode current collector and that is coated with the negative electrode active material layer, and the portion that is of the negative electrode current collector and that is not coated with the negative electrode active material layer is used as a negative electrode tab. The negative electrode current collector may be made of copper, and the negative electrode active material may be carbon, silicon, or the like. To ensure that a large current passes through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be a wound structure or a stacked structure, and the embodiments of the present application are not limited thereto.

In recent years, new energy vehicles have been developed with a great leap. In the field of electric vehicles, power batteries play an irreplaceably important role as a power source of the electric vehicle. A battery is composed of a case and a plurality of battery cells accommodated in the case. As a core component of new energy vehicles, the battery has relatively high requirements in terms of both safety and cycle life.

The inventors have found that in a general power battery, in order to enable a plurality of battery cells to be stably and almost immovably accommodated in a case, a hold-down bar is generally used to hold down a plurality of battery cells and the case tightly. In the related art, the entire hold-down bar is processed by means of integrated molding. The hold-down bar is directly held down on the battery cells, and then two ends of the hold-down bar are locked to the case by using bolts. However, the integrally molded hold-down bar cannot simultaneously meet the insulation requirements of the battery cells and the strength requirements of the bolt connection, resulting in the reliability of the connection between the hold-down bar and the case or the battery cells being seriously affected. Specifically, in a case where the hold-down bar is made of an insulating material, although the hold-down bar can exert superior insulating material performance in the connection to the battery cells, the hold-down bar has too low strength in the bolt connection to the case, and is prone to breakage.

Based on the above considerations, in order to solve the problem that the integrally molded hold-down bar cannot be adapted to the battery cells and the case at the same time, the inventors, after in-depth research, have designed a battery, which is applied to a battery, the battery including: a hold-down bar body and connectors, wherein a mounting groove is formed in the hold-down bar body; two ends of the hold-down bar body are respectively connected to the connectors, and each connector includes a main body section connected to the hold-down bar body and an assembly section configured to be connected to a case of the battery, at least part of the main body section being mounted in the mounting groove.

In the battery of this structure, by setting the hold-down bar to be of a split structure formed by splicing the hold-down bar body and the connectors, through the use of this structure, on one hand, the hold-down bar body is made of an insulating material, and the hold-down bar body is attached to the battery cells, thereby reducing the probability of serious safety accidents caused by electric leakage and further optimizing the safety protection performance of the entire battery, and on the other hand, the connectors are made of a high-strength material, which realizes a high-strength connection between the connectors and the case, and prevents the battery from causing the breakage of the hold-down bar under the working condition of large external disturbance, thereby improving the reliability of the connection between the hold-down bar, the battery cells, and the case.

An embodiment of the present application provides an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1.

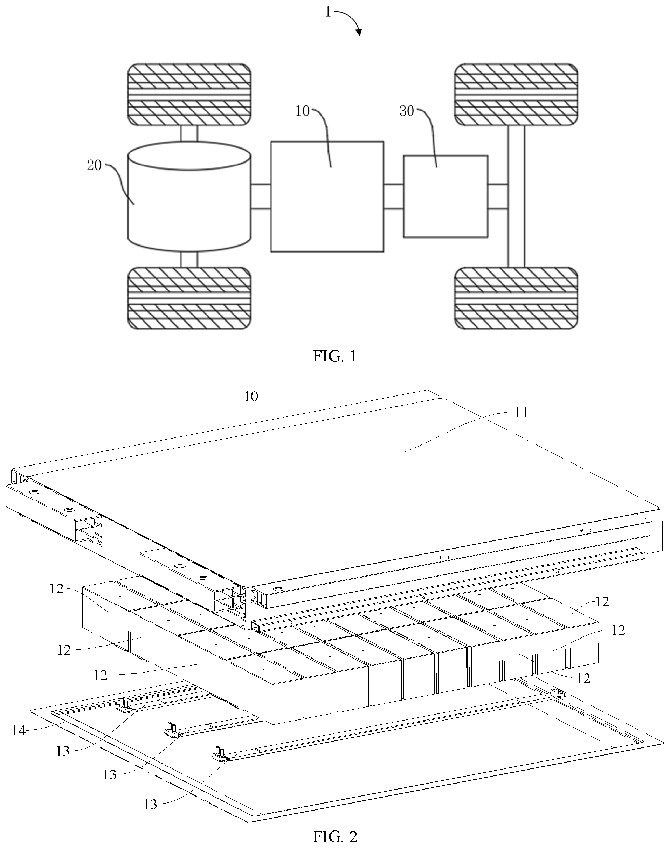

As shown in FIG. 1, FIG. 1 is a schematic structural view of a vehicle 1 according to an embodiment of the present application. The vehicle 1 may be a fuel vehicle, a gas vehicle, or a new energy vehicle, and the new energy vehicle may be a battery electric vehicle, a hybrid electric vehicle, or a range-extended electric vehicle, or the like. A motor 20, a controller 30, and a battery 10 may be arranged inside the vehicle 1. The controller 30 is configured to control the battery 10 to supply power to the motor 20. For example, the battery 10 may be arranged at the bottom or at the head or at the tail of the vehicle 1. The battery 10 may be configured to supply power to the vehicle 1, for example, the battery 10 may be used as an operating power source for the vehicle 1, used for a circuit system of the vehicle 1, for example, used for operating power requirements for starting, navigation, and running of the vehicle 1. In another embodiment of the present application, the battery 10 may be used not only as the operating power source of the vehicle 1, but also as a driving power source of the vehicle 1, instead of or partially instead of fuel or natural gas to provide driving power to the vehicle 1.

To meet different power requirements, the battery 10 may include a plurality of battery cells 12, where the plurality of battery cells 12 may be connected through series connection, parallel connection or parallel-series connection, and the parallel-series connection refers to a mixture of series connection and parallel connection.

FIG. 2 is an exploded view of a structure of a battery 10 according to one embodiment of the present application. The battery 10 includes a case 11 and a plurality of battery cells 12, where the battery cells 12 are configured to be accommodated in the case 11. The case 11 is configured to provide an assembly space for the battery cells 12, and the case 11 may use various structures. In some embodiments, the case 11 may be of a non-closed structure. Specifically, the battery 10 may further include a bottom protection plate 14, the case 11 may define an accommodating cavity, an opening of the accommodating cavity may face downward, the plurality of battery cells 12 may be mounted in the accommodating cavity, the bottom protection plate 14 may be connected to the case 11, and the bottom protection plate 14 may be configured to block the accommodating cavity.

In some other embodiments, the case 11 may be of a closed structure. The case 11 may include a first case body and a second case body. The first case body and the second case body cover each other, and jointly define an assembly space for accommodating the battery cells 12. The second case body may be of a hollow structure with an opening at one end, the first case body may be of a plate-shaped structure, and the first case body covers an opening side of the second case body, such that the first case body and the second case body jointly define the assembly space. The first case body and the second case body may each be of a hollow structure with an opening on one side, and the opening side of the first case body covers the opening side of the second case body. Certainly, the case 11 formed by the first case body and the second case body may be in various shapes, for example, a cylinder, a cuboid, or the like.

In the battery 10, the plurality of battery cells 12 may be subjected to series connection, parallel connection, or series-parallel connection. The series-parallel connection means that the plurality of battery cells 12 are subjected to both series connection and parallel connection. The plurality of battery cells 12 may be directly connected in series, in parallel, or in a combination of both, and the whole of the plurality of battery cells 12 is accommodated in the case 11. Certainly, the battery 10 may also be formed in a manner that a plurality of battery cells 12 are subjected to series connection, parallel connection, or series-parallel connection to form battery modules, and the plurality of battery modules are then subjected to series connection, parallel connection, or series-parallel connection to form an integrated unit, which is accommodated in the case 11. The battery 10 may further include other structures. For example, the battery 10 may further include a busbar component for implementing an electrical connection between the plurality of battery cells 12.

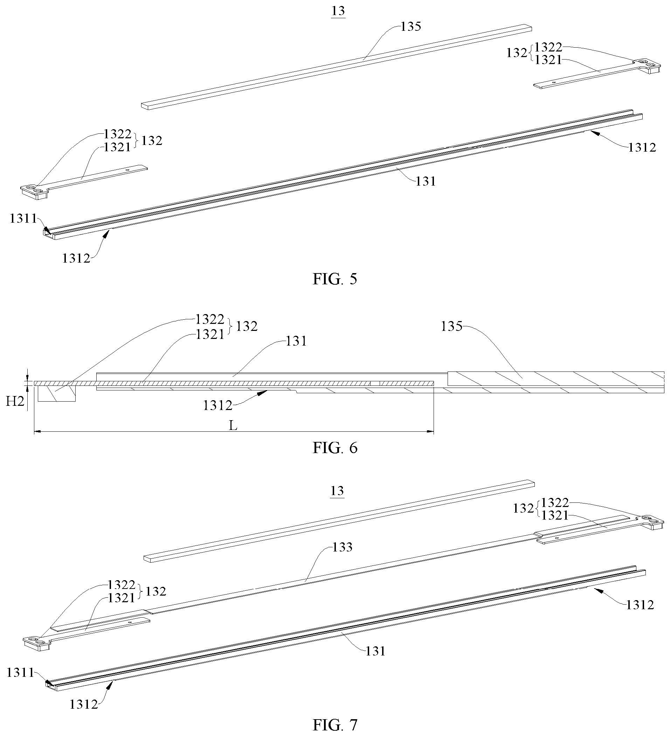

According to some embodiments of the present application, as shown in FIGS. 5-9, the present application provides a hold-down bar 13, which is applied to the battery 10. The hold-down bar 13 includes: a hold-down bar body 131 and connectors 132. A mounting groove 1311 is formed in the hold-down bar body 131. Two ends of the hold-down bar body 131 are respectively connected the connectors 132. Each connector 132 includes a main body section 1321 connected to the hold-down bar body 131 and an assembly section 1322 configured to be connected to the case 11 of the battery 10. At least part of the main body section 1321 is mounted in the mounting groove 1311.

The hold-down bar body 131 may be made of an insulating material, wherein the insulating material may include, but is not limited to, polyvinyl chloride, polyethylene, polystyrene, polytetrafluoroethylene, polycarbonate, or the like, which is not limited herein.

The cross-sectional shape of the hold-down bar body 131 may be U-shaped, H-shaped, I-shaped, or the like, which is not limited herein. For example, in some embodiments, the cross-sectional shape of the hold-down bar body 131 is U-shaped.

The connector 132 may be made of a metal material, wherein the metal material may include, but is not limited to, stainless steel, an aluminum alloy, a titanium alloy, or the like, which is not limited herein.

In actual execution, as shown in FIGS. 2-9, during the assembly process of the hold-down bar 13, the main body section 1321 of the connector 132 may be connected to two ends of the hold-down bar body 131 by gluing or other means, the hold-down bar body 131 may be attached to the surfaces of the plurality of battery cells 12, an opening of the mounting groove 1311 may face a direction which faces away from the battery cells 12, the assembly section 1322 of the connector 132 may protrude toward the case 11, and the assembly section 1322 may be provided with at least one connecting hole configured to be connected to the case 11.

Specifically, as shown in FIGS. 2-4, the assembly section 1322 of the connector 132 located at one end of the hold-down bar body 131 may be connected to a front end beam of the case 11, and the assembly section 1322 of the connector 132 located at the other end of the hold-down bar body 131 may be connected to a rear end beam of the case 11.

The connection manner between the connecting hole of the assembly section 1322 and the case 11 includes, but is not limited to, bolt connection, riveting connection, FDS (Flow Drill Screw) connection, or the like, which is not limited herein. For example, in some embodiments, the connection manner between the connecting hole of the assembly section 1322 and the case 11 is bolt connection.

According to the hold-down bar 13 provided in the embodiments of the present application, by the provision of the hold-down bar body 131 and the connectors 132 above, compared with a conventional solution in which the hold-down bar 13 is integrally molded, the hold-down bar 13 is simultaneously adapted to the battery cells 12 and the case 11, the insulation performance of the hold-down bar body 131 is greatly improved, and the insulation requirements of the hold-down bar body 131 when being attached to the battery cells 12 are met, thereby reducing the probability of serious safety accidents caused by electric leakage and further optimizing the safety protection performance of the entire battery 10. The strength requirements of the connectors 132 when being connected to the case 11 are met simultaneously, the high-strength connection between the connectors 132 and the case 11 is achieved, and the battery 10 is prevented from causing the breakage of the hold-down bar 13 under the working condition of large external disturbance, thereby improving the reliability of the connection between the hold-down bar 13, the battery cells 12, and the case 11.

According to some embodiments of the present application, as shown in FIGS. 5-9, the thickness of the main body section 1321 may be less than the depth of the mounting groove 1311, and the main body section 1321 may be connected to the bottom of the mounting groove 1311.

The main body section 1321 may be located in the mounting groove 1311, and the main body section 1321 may be attached to the bottom of the mounting groove 1311. When the connector 132 is subjected to a large force, a wall of the mounting groove 1311 may limit the displacement of the main body section 1321 in a width direction of the main body of the hold-down bar 13, so as to prevent the main body section 1321 from driving the assembly section 1322 to deviate to affect the stability of the connection between the assembly section 1322 and the case 11, and reduce the stress between the main body section 1321 and the assembly section 1322 to reduce the probability of brittle breakage between the main body section 1321 and the assembly section 1322.

Based on that the case 11 is connected to the bottom protection plate 14 in the above battery 10, the opening of the mounting groove 1311 may face the bottom protection plate 14. By setting the main body section 1321 not to protrude out of the mounting groove 1311,the connector 132 may not abut against the bottom protection plate 14 by using this structure, so as to prevent the connector 132 from being compressed between the hold-down bar body 131 and the bottom protection plate 14 for a long time to cause the bottom protection plate 14 to deform or even squeeze the battery cells 12, and reduce the actual force on the bottom protection plate 14 to increase the stability and reliability of the connection between the case 11 and the bottom protection plate 14.

According to some embodiments of the present application, as shown in FIGS. 5- 9, the main body section 1321 may be connected to the mounting groove 1311 by gluing.

Specifically, the main body section 1321 and the mounting groove 1311 may be bonded by using a high-strength structural adhesive, where the structural adhesive may include, but is not limited to, a high-performance silicone structural adhesive, a neutral transparent silicone structural adhesive, or the like, which is not limited herein.

It can be understood that when the battery is in a working state, the plurality of battery cells will expand to a certain extent due to high temperature. If the connector is connected to the hold-down bar body by means of welding, when an expansion force is transmitted to the hold-down bar body, a weld seam between the hold-down bar body and the connector is inherently a weak point of stress, and the weld seam is extremely easy to break when subjected to the expansion force.

In the case where the main body section 1321 is connected to the mounting groove 1311 by gluing, based on that the structural adhesive can bear a large load and has stable performance, the structural adhesive between the hold-down bar body 131 and the connector 132 may bear most of the expansion force, which reduces the force on the hold-down bar body 131 and the connector 132, and reduces the influence of the expansion of the battery cells 12 on the connection strength between the hold-down bar body 131 and the connector 132 as much as possible, thereby prolonging the service life of the entire hold-down bar 13.

According to some embodiments of the present application, as shown in FIGS. 5-9, two ends of the hold-down bar body 131 may be provided with avoidance notches 1312 on the side facing away from the mounting groove 1311.

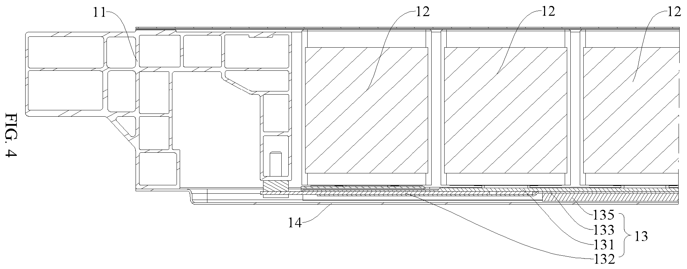

In this implementation, as shown in FIGS. 4-9, the hold-down bar body 131 may be in a form of being thin on two sides and thick in the middle in a length direction. The plurality of battery cells 12 are provided with bar pieces at positions corresponding to two ends of the hold-down bar body 13. The plurality of battery cells 12 may be connected in series or in parallel with each other through the bar pieces. During cyclic charging and discharging of the battery cells 12, due to the chemical reactions inside the battery cells 12, the thickness of the battery cells 12 will increase, which is manifested as expansion to two sides, at which time an electrode post will change with the change of expansion. The bar pieces may have a certain extensibility to avoid being stretched and cracked at the electrode post. At the position where the avoidance notches 1312 are provided, due to the volume of the bar pieces themselves, the avoidance notches 1312 can reserve the space occupied by the bar pieces in a natural state, and the tolerance caused by the expansion of the bar pieces also needs to be considered in the design of the avoidance notches 1312. Therefore, the size of the avoidance notches 1312 needs to be greater than the size of the bar pieces themselves in actual design to prevent the bar pieces from squeezing against the hold-down bar 13 when the bar pieces are extended.

According to the hold-down bar 13 provided in the embodiments of the present application, by the provision of the avoidance notches 1312 above, the avoidance of the bar pieces by the hold-down bar body 131 when the hold-down bar body 131 is assembled to the plurality of battery cells 12 is realized. The size of the avoidance notches 1312 may be adjusted according to actual requirements to prevent the bar pieces from squeezing against the hold-down bar 13 when the bar pieces are extended, which would cause poor contact between the bar pieces and the electrode post, thereby maintaining the power supply stability of the battery 10, and further optimizing the performance of the battery 10. At the same time, the overall weight of the hold-down bar 13 is reduced, which is conductive to increasing the energy density of the battery 10.

According to some embodiments of the present application, as shown in FIGS. 5 and 7, the size of the main body section 1321 in a width direction of the hold-down bar body 131 may be less than the size of the assembly section 1322 in the width direction.

In this implementation, as shown in FIGS. 5 and 7, the main body section 1321 may be integrally molded with the assembly section 1322. Based on that the size of the main body section 1321 in a width direction of the hold-down bar body 131 may be less than the size of the assembly section 1322 in the width direction, the entire connector 132 may be approximately T-shaped, and the thickness of the main body section 1321 may be less than the thickness of the assembly section 1322. The assembly section 1322 may be provided with at least one connecting hole configured to be connected to the case 11. The connecting hole may penetrate through the assembly section 1322 in a thickness direction, at which time the assembly section 1322 wider than the main body section 1321 may provide sufficient area for the setting of the connecting hole. The number of connecting holes may be increased or decreased according to actual needs.

According to the hold-down bar 13 provided in the embodiments of the present application, by the above structural design that the width of the main body section 1321 is less than the width of the assembly section 1322, the entire connector 132 forms a top-heavy T-shape, which provides sufficient area for the setting of the connecting hole. The number of the connecting holes may be increased or decreased according to actual needs, the use width and flexibility of the entire hold-down bar 13 may be increased, and the contact area between the connector 132 and the case 11 may be enlarged at the same time, thereby enhancing the stability and durability of the connection between the connector 132 and the case 11.

According to some embodiments of the present application, as shown in FIGS. 4-9, the hold-down bar 13 may further include: a first buffer member 135.

The first buffer member 135 may be mounted in the mounting groove 1311, and the first buffer member 135 may be separated from the connector 132.

The first buffer member 135 may include, but is not limited to, a foamed plate, pearl cotton, polyurethane foaming plastic, or the like, which is not limited herein.

In this embodiment, as shown in FIGS. 4-9, the first buffer member 135 may be located in the middle portion of the hold-down bar body 131, and the thickness of the first buffer member 135 may be greater than the depth of the mounting groove 1311. Based on the high elasticity of the first buffer member 135, after the hold-down bar 13 is assembled on the plurality of battery cells 12 and the case 11, the first buffer member 135 may be elastically compressed between the bottom protection plate 14 and the hold-down bar body 131. Since the portions at two ends of the entire hold-down bar 13 are of a two-layer structure in which the connector 132 is combined with the hold-down bar body 131, the middle portion of the entire hold-down bar 13 is of a single-layer structure in which there is only the hold-down bar body 131, that is, the middle portion of the hold-down bar 13 is a weak portion of stress. The provision of the first buffer member 135 may provide protection for the middle portion of the hold-down bar 13.

According to the hold-down bar 13 provided in the embodiments of the present application, by the provision of the first buffer member 135 above, in cooperation with the structural design in which the first buffer member 135 is provided in the middle portion of the hold-down bar body 131, the first buffer member 135 provides strong protection for the relatively weak middle portion. When the battery cells 12 expand, the first buffer member 135 can absorb most of the expansion force, to prevent the middle portion of the hold-down bar body 131 from brittle breakage under force.

According to some embodiments of the present application, as shown in FIGS. 4-9, the first buffer member 135 may be connected to the hold-down bar body 131 and the connector 132 by gluing.

Specifically, the first buffer member 135 may be bonded to the hold-down bar body 131 and the connector 132 by using a high-strength structural adhesive, where the structural adhesive may include, but is not limited to, a high-performance silicone structural adhesive, a neutral transparent silicone structural adhesive, or the like, which is not limited herein.

As shown in FIGS. 4-9, based on that the first buffer member 135 may be separated from the connector 132 as described above, that is, there is a gap between the first buffer member 135 and the connector 132, the structural adhesive may fill the gap between the first buffer member 135 and the connector 132, or the structural adhesive may fill the entire mounting groove 1311.

In the case where the first buffer member 135 is connected to the hold-down bar body 131 and the connector 132 by gluing, based on that the structural adhesive can bear a large load and has stable performance, the structural adhesive between the first buffer member 135 and the hold-down bar body 131 as well as the connector 132 may bear most of the expansion force, which further reduces the force on the hold-down bar body 131 and the connector 132, thereby prolonging the working life of the entire hold-down bar 13.

According to some embodiments of the present application, as shown in FIGS. 7-9, the hold-down bar 13 may further include: a connecting band 133.

Two ends of the connecting band 133 may be connected to the main body section 1321, the connecting band 133 may be connected to the hold-down bar body 131, and the connecting band 133 may be mounted in the mounting groove 1311.

In consideration of the strength requirements, the connecting band 133 may be made of steel. Specifically, the steel may include, but is not limited to, carbon steel, alloy steel, stainless steel, tool steel, or the like, which is not limited herein.

The connecting band 133 does not protrude out of the mounting groove 1311 as a whole. The connecting band 133 may be connected to the connector 132 by gluing, bolt connection, welding, or the like. Specifically, in the case where the connecting band 133 is connected to the connector 132 by gluing, considering the connection strength, sufficiently large contact area is required between the connecting section and the connector 132 for glue application. In the case that the connecting band 133 is connected to the connector 132 by bolt connection, both the connecting band 133 and the connector 132 may be provided with threaded holes. In the case where the connecting band 133 is connected to the connector 132 by welding, a plurality of welding spots may be provided between the connecting band 133 and the connector 132. The welding manner may be plug welding, spot welding, projection welding, or the like, which is not limited herein.

It should be noted that when the connector 132, the hold-down bar body 131, and the connecting band 133 are assembled, the connector 132, the hold-down bar body 131, and the connecting band 133 may all be provided with a positionally corresponding positioning structure, wherein the positioning structure may be a positioning hole, a positioning pin, or the like, which is not limited herein.

According to the hold-down bar 13 provided in the embodiments of the present application, by the provision of the connecting band 133 above, the hold-down bar body 131, the connector 132, and the connecting band 133 are connected to each other. The use of this structure significantly enhances the shear resistance of the connector 132, reduces the probability of a structural adhesive between the connector 132 and the hold-down bar body 131 falling off under force, further strengthens the overall structure of the hold-down bar 13, and at the same time improves the assembly accuracy between the connector 132, the hold-down bar body 131, and the connecting band 133 in cooperation with the design of the positioning structure.

According to some embodiments of the present application, as shown in FIGS. 7-9, the connecting band 133 may be connected to the hold-down bar body 131 by gluing.

Specifically, the connecting band 133 may be bonded to the hold-down bar body 131 by using a high-strength structural adhesive, where the structural adhesive may include, but is not limited to, a high-performance silicone structural adhesive, a neutral transparent silicone structural adhesive, or the like, which is not limited herein.

In the case where the connecting band 133 is connected to the hold-down bar body 131 by gluing, based on that the structural adhesive can bear a large load and has stable performance, the structural adhesive between the connecting band 133 and the hold-down bar body 131 may bear most of the expansion force, which reduces the force on the connecting band 133 and the hold-down bar body 131, and reduces the influence of the expansion of the battery cells 12 on the connection strength between the connecting band 133 and the hold-down bar body 131 as much as possible, thereby prolonging the service life of the entire hold-down bar 13.

According to some embodiments of the present application, as shown in FIGS. 7-9, a part of the connecting band 133 may be stacked and connected to the main body section 1321.

In this implementation, as shown in FIGS. 7-8, a part of the connecting band 133 may be attached to one side of the main body section 1321 facing away from the hold-down bar body 131.

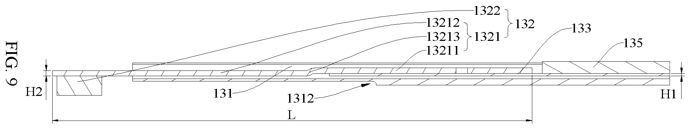

In some other implementations, as shown in FIG. 9, a part of the connecting band 133 may be attached to one side of the main body section 1321 close to the hold-down bar body 131.

In still some implementations, two ends of the connecting band 133 may abut against and be connected to the main body section 1321.

According to the hold-down bar 13 provided by the embodiments of the present application, by the above structural design in which a part of the connecting band 133 is stacked and connected to the main body section 1321, compared with the solution in which the connecting band 133 abuts against the connector 132, the contact area between the connecting band 133 and the main body section 1321 is significantly increased, thereby effectively improving the connection strength between the connecting band 133 and the connector 132, and further strengthening the overall structure of the hold-down bar 13.

According to some embodiments of the present application, as shown in FIGS. 7-9, a surface of the connecting band 133 connected to the bottom of the mounting groove 1311 may be flush with a surface of the main body section 1321 connected to the bottom of the mounting groove 1311.

It may be understood that, since the thickness of the connector is not negligible, in the case where a part of the connecting band is stacked and connected to the main body section, there is a gap of connector thickness between the connecting band and the hold-down bar body, but the gap needs to be filled with the structural adhesive during the assembly of the connecting band, resulting in an increase in the overall weight of the hold-down bar.

By setting the surface of the connecting band 133 connected to the bottom of the mounting groove 1311 to be flush with the surface of the main body section 1321 connected to the bottom of the mounting groove 1311, a gap between the connecting band 133 and the hold-down bar body 131 is avoided by the reasonable deformation in the structure, which effectively reduces the usage amount of structural adhesive, achieves cost control, and at the same reduces the overall weight of the hold-down bar 13, and achieves a lightweight design, thereby improving the energy density of the entire battery 10.

According to some embodiments of the present application, as shown in FIGS. 7-8, the connecting band 133 may include a first connecting section 1331, a first bending section 1333, and a second connecting section 1332, wherein the first connecting section 1331 may be connected to two ends of the second connecting section 1332, the first bending section 1333 may be connected between the first connecting section 1331 and the second connecting section 1332, the first connecting section 1331 may be attached to the connector 132, the first connecting section 1331 may be located on one side of the connector 132 facing away from the hold-down bar body 131, the second connecting section 1332 may be attached to the hold-down bar body 131, and a surface of the second connecting section 1331 connected to the bottom of the mounting groove 1311 may be flush with a surface of the main body section 1321 connected to the bottom of the mounting groove 1311.

In this implementation, as shown in FIGS. 7-8, the second connecting section 1332 may be connected to the first connecting section 1331 at both ends through the first bending section 1333. Based on that the first connecting section 1331 is attached to the connector 132 and the second connecting section 1332 is attached to the hold-down bar body 131, the first bending section 1333 may fill a height difference between the first connecting section 1331 and the second connecting section 1332, so as to realize that the attaching surface between the second connecting section 1332 and the hold-down bar body 131 is flush with the attaching surface between the main body section 1321 and the hold-down bar body 131, wherein an outer wall surface of the first bending section 1333 may be arc-shaped, and further, the first bending section 1333 may include two arc sections, and the centers of curvature of the two arc sections are respectively located on both sides of the first bending section 1333.

According to the hold-down bar 13 provided in the embodiments of the present application, by the above structural design in which the first bending section 1333 is provided on the connecting band 133, a surface of the second connecting section 1332 connected to the bottom of the mounting groove 1311 is flush with a surface of the main body section 1321 connected to the bottom of the mounting groove 1311, which reduces the usage amount of the structural adhesive, effectively saves the production cost, and reduces the overall weight of the hold-down bar 13, thereby improving the energy density of the entire battery 10.

According to some embodiments of the present application, as shown in FIG. 9, the main body section 1321 may include a first connector section 13211, a second bending section 13213, and a second connector section 13212 that are sequentially connected, wherein the first connector section 13211 may be attached to the connecting band 133, the first connector section 13211 may be located on one side of the connecting band 133 facing away from the hold-down bar body 131, the second connector section 13212 may be attached to the hold-down bar body 131, and a surface of the connecting band 133 connected to the bottom of the mounting groove 1311 may be flush with a surface of the second connector section 13212 connected to the bottom of the mounting groove 1311.

In this implementation, as shown in FIG. 9, the connector 132 may include an assembly section 1322, a first connector section 13211, a second bending section 13213, and a second connector section 13212 which are sequentially connected, wherein the connecting band 133 may be attached to the first connector section 13211 of the connector 132 at both ends, and the first connector section 13211 may be connected to the second connector section 13212 through the second bending section 13213. Based on that the first connector section 13211 is attached to the connecting band 133 and the second connector section 13212 is attached to the hold-down bar body 131, the second bending section 13213 may fill a height difference between the first connector section 13211 and the second connector section 13212, so as to realize that the attaching surface between the second connector section 13212 and the hold-down bar body 131 is flush with the attaching surface between the connecting band 133 and the hold-down bar body 131, wherein an outer wall surface of the second bending section 13213 may be arc-shaped, and further, the second bending section 13213 may include two arc sections, and the centers of curvature of the two arc sections may be respectively located on both sides of the second bending section 13213.

According to the hold-down bar 13 provided in the embodiments of the present application, by the above structural design in which the second bending section 13213 is provided on the main body section 1321 of the connector 132, a surface of the connecting band 133 connected to the bottom of the mounting groove 1311 is flush with a surface of the second connector section 13212 connected to the bottom of the mounting groove 1311, which reduces the usage amount of the structural adhesive, effectively saves the production cost, and reduces the overall weight of the hold-down bar 13, thereby improving the energy density of the entire battery 10.

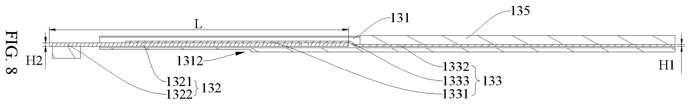

According to some embodiments of the present application, as shown in FIGS. 8-9, the minimum thickness H1 of the connecting band 133 may satisfy: 0.1 mm≤H1≤50 mm.

Specifically, the minimum thickness H1 of the connecting band 133 may be 0.1 mm, 5.25 mm, 15 mm, 30.785 mm, 45.5 mm, 50 mm, or other values between 0.1 mm and 50 mm, which is not limited herein.

It should be noted that the minimum thickness H1 of the connecting band 133 refers to the thickness of the weakest portion of the connecting band 133, and in actual design, the thickness of the connecting band 133 may be uniform in a length direction.

According to the hold-down bar 13 provided in the embodiments of the present application, by restricting the range of the minimum thickness H1 of the connecting band 133 as described above, the minimum thickness H1 of the connecting band 133 is prevented from being too large, which would result in excessive weight of the connection band 133, thereby reducing the weight of the hold-down bar 13 as much as possible, and further improving the energy density of the battery 10. Moreover, the minimum thickness H1 of the connecting band 133 is prevented from being too small, which would result in insufficient rigidity of the connecting band 133 itself, thereby improving the connection strength between the connecting band 133 and the connector 132, and further improving the reliability and durability of the overall structure of the hold-down bar 13.

According to some embodiments of the present application, as shown in FIGS. 6 and 8-9, the length L of the connector 132 may satisfy: 10 mm≤L≤3000 mm.

Specifically, the length L of the connector 132 may be 10 mm, 100.8 mm, 1200 mm, 2100.45 mm, 2500 mm, 3000 mm, or other values between 10 mm and 3000 mm, which is not limited herein.

According to the hold-down bar 13 provided in the embodiments of the present application, by restricting the range of the length L of the connector 132 as described above, the length L of the connector 132 is prevented from being too large, which would result in excessive weight of the connector 132, thereby reducing the weight of the hold-down bar 13 as much as possible, and further improving the energy density of the battery 10. In addition, the length L of the connector 132 is prevented from being too small, which would result in excessively small contact area between the connector 132 and the hold-down bar body 131, thereby improving the connection strength between the connector 132 and the hold-down bar body 131.

According to some embodiments of the present application, as shown in FIGS. 6 and 8-9, the minimum thickness H2 of the connector 132 may satisfy: H2≥0.5 mm.

Specifically, the minimum thickness H2 of the connector 132 may be 0.5 mm, 1.25 mm, 5 mm, 6.5 mm, or other values greater than 0.5 mm, which is not limited herein.

It should be noted that, based on that the thickness of the main body section 1321 is less than the thickness of the assembly section 1322, the minimum thickness H2 of the connector 132 refers to the thickness of the weakest portion of the main body section 1321 of the connector 132, and in actual design, the thickness of the main body section 1321 may be uniform in a length direction.

According to the hold-down bar 13 provided in the embodiments of the present application, by restricting the range of the minimum thickness H2 of the connector 132 as described above, the minimum thickness H2 of the connector 132 is prevented from being too small, which would result in insufficient rigidity of the connector 132 itself, thereby improving the connection strength between the connector 132, the connecting band 133, and the hold-down bar body 131, and further improving the reliability and durability of the overall structure of the hold-down bar 13.

According to some embodiments of the present application, the present application further provides a battery 10, including a case 11, a plurality of battery cells 12 and hold-down bars 13 in any one of the above solutions, wherein the case 11 defines an accommodating cavity, the plurality of battery cells 12 are mounted in the accommodating cavity, the plurality of hold-down bars 13 are mounted on surfaces of the plurality of battery cells 12, and the plurality of hold-down bars 13 are connected to the case 11.

The plurality of hold-down bars 13 are mounted on the sides of the plurality of battery cells 12 where the electrode terminals are located. For example, in the case where the battery 10 is assembled upright, the plurality of hold-down bars 13 may be mounted on the top surfaces of the plurality of battery cells 12; in the case where the battery 10 is assembled upside down, the plurality of hold-down bars 13 may be mounted to the bottom surfaces of the plurality of battery cells 12.

It should be noted that the battery 10 may further include a second buffer member. The second buffer member may be mounted on the bottom surfaces of the plurality of battery cells 12, and the second buffer member and the hold-down bars 13 are located between the bottom protection plate 14 and the plurality of battery cells 12. The second buffer member may be configured to protect the electrode posts of the plurality of battery cells 12.

The second buffer member may include, but is not limited to, a foamed plate, pearl cotton, polyurethane foaming plastic, or the like, which is not limited herein.

According to some embodiments of the present application, the present application further provides an electric device, including the battery 10 in any one of the above solutions, and the battery 10 is configured to provide electric energy for the electric device.

The electric device may be any one of the above devices or systems using the battery 10.

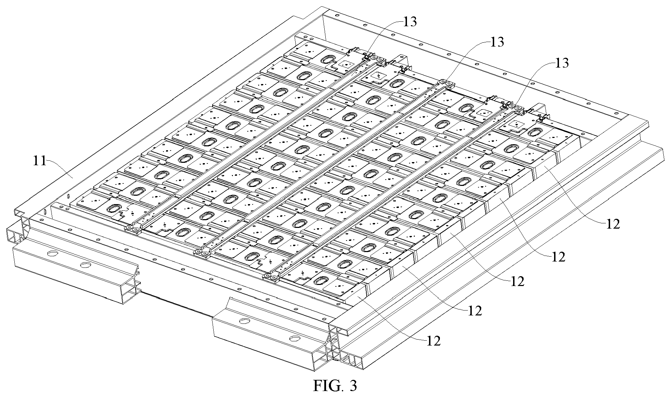

According to some embodiments of the present application, referring to FIGS. 3-9, the present application provides a hold-down bar 10, which is applied to the battery 10. The hold-down bar 13 includes: a hold-down bar body 131 and connectors 132. A mounting groove 1311 is formed in the hold-down bar body 131. Two ends of the hold-down bar body 131 are respectively connected the connectors 132. Each connector 132 comprises a main body section 1321 connected to the hold-down bar body 131 and an assembly section 1322 configured to be connected to the case 11 of the battery 10. At least part of the main body section 1321 is mounted in the mounting groove 1311. The thickness of the main body section 1321 is less than the depth of the mounting groove 1311, the main body section 1321 is connected to the bottom of the mounting groove 1311, the main body section 1321 is connected to the mounting groove 1311 by gluing, two ends of the hold-down bar body 131 are provided with avoidance notches 1312 on the side facing away from the mounting groove 1311, and the size of the main body section 1321 in a width direction of the hold-down bar body 131 is less than the size of the assembly section 1322 in the width direction. The hold-down bar 13 further includes: a first buffer member 135, which is mounted in the mounting groove 1311 and separated from the connector 132, the first buffer member 135 being connected to the hold-down bar body 131 and the connector 132 by gluing. The hold-down bar 13 further includes: a connecting band 133, of which two ends are connected to the main body section 1321, the connecting band 133 being connected to the hold-down bar body 131, the connecting band 133 being mounted in the mounting groove 1311, and the connecting band 133 being connected to the hold-down bar body 131 by gluing. A part of the connecting band 133 is stacked and connected to the main body section 1321, and a surface of the connecting band 133 connected to the bottom of the mounting groove 1311 is flush with a surface of the main body section 1321 connected to the bottom of the mounting groove 1311.

Specifically, the connecting band 133 and the connector 132 include the following two structural forms:

first, the connecting band 133 includes a first connecting section 1331, a first bending section 1333 and a second connecting section 1332, the first connecting section 1331 being connected to two ends of the second connecting section 1332, the first bending section 1333 being connected between the first connecting section 1331 and the second connecting section 1332, the first connecting section 1331 being attached to the connector 132, the first connecting section 1331 being located on one side of the connector 132 facing away from the hold-down bar body 131, the second connecting section 1332 being attached to the hold-down bar body 131, and a surface of the second connecting section 1332 connected to the bottom of the mounting groove 1311 being flush with a surface of the main body section 1321 connected to the bottom of the mounting groove 1311;

second, the main body section 1321 includes a first connector section 13211, a second bending section 13213, and a second connector section 13212 which are sequentially connected, the first connector section 13211 being attached to the connecting band 133, the first connector section 13211 being located on one side of the connecting band 133 facing away from the hold-down bar body 131, the second connector section 13212 being attached to the hold-down bar body 131, and a surface of the connecting band 133 connected to the bottom of the mounting groove 1311 being flush with a surface of the second connector section 13212 connected to the bottom of the mounting groove 1311.

The minimum thickness H1 of the connecting band 133 satisfies: 0.1 mm≤H1≤50 mm. The length L of the connector 132 satisfies: 10 mm≤L≤3000 mm. The minimum thickness H2 of the connector 132 satisfies: H2≥0.5 mm.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A hold-down bar, which is applied to a battery, comprising:
a hold-down bar body, in which a mounting groove is formed; and
connectors, wherein two ends of the hold-down bar body are respectively connected to the connectors, and each connector comprises a main body section connected to the hold-down bar body and an assembly section configured to be connected to a case of the battery, at least part of the main body section being mounted in the mounting groove.

2. The hold-down bar according to claim 1, wherein the thickness of the main body section is less than the depth of the mounting groove, and the main body section is connected to the bottom of the mounting groove.

3. The hold-down bar according to claim 2, wherein the main body section is connected to the mounting groove by gluing.

4. The hold-down bar according to any one of claims 1-3, wherein two ends of the hold-down bar body are provided with avoidance notches on the side facing away from the mounting groove.

5. The hold-down bar according to any one of claims 1-4, wherein the size of the main body section in a width direction of the hold-down bar body is less than the size of the assembly section in the width direction.

6. The hold-down bar according to any one of claims 1-5, further comprising:
a first buffer member, which is mounted in the mounting groove and separated from the connector.

7. The hold-down bar according to claim 6, wherein the first buffer member is connected to the hold-down bar body and the connector by gluing.

8. The hold-down bar according to any one of claims 1-7, further comprising:
a connecting band of which two ends are connected to the main body section, the connecting band being connected to the hold-down bar body, and the connecting band being mounted in the mounting groove.

9. The hold-down bar according to claim 8, wherein the connecting band is connected to the hold-down bar body by gluing.

10. The hold-down bar according to claim 8 or 9, wherein a part of the connecting band is stacked and connected to the main body section.

11. The hold-down bar according to claim 10, wherein a surface of the connecting band connected to the bottom of the mounting groove is flush with a surface of the main body section connected to the bottom of the mounting groove.

12. The hold-down bar according to claim 11, wherein the connecting band comprises a first connecting section, a first bending section, and a second connecting section, the first connecting section being connected to two ends of the second connecting section, the bending section being connected between the first connecting section and the second connecting section, the first connecting section being attached to the connector and located on one side of the connector facing away from the hold-down bar body, the second connecting section being attached to the hold-down bar body, and a surface of the second connecting section connected to the bottom of the mounting groove being flush with a surface of the main body section connected to the bottom of the mounting groove.

13. The hold-down bar according to claim 11, wherein the main body section comprises a first connector section, a second bending section, and a second connector section that are sequentially connected, the first connector section being attached to the connecting band and located on one side of the connecting band facing away from the hold-down bar body, the second connector section being attached to the hold-down bar body, and a surface of the connecting band connected to the bottom of the mounting groove being flush with a surface of the second connector section connected to the bottom of the mounting groove.

14. The hold-down bar according to any one of claims 8-13, wherein the minimum thickness H1 of the connecting band satisfies: 0.1 mm≤H1≤50 mm.

15. The hold-down bar according to any one of claims 1-14, wherein the length L of the connector satisfies: 10 mm≤L≤3000 mm.

16. The hold-down bar according to any one of claims 1-15, wherein the minimum thickness H2 of the connector satisfies: H2≥0.5 mm.

17. A battery, comprising:
a case, which defines an accommodating cavity;
a plurality of battery cells, which are mounted in the accommodating cavity; and
a plurality of the hold-down bars according to any one of claims 1-16, which are mounted on surfaces of the plurality of battery cells and connected to the case.

18. An electric device, comprising:
the battery according to claim 17.
